(19) Europäisches Patentamt
European Patent Office
Office européen des brevets

(11) **EP 4 246 178 A2**

(12) **EUROPEAN PATENT APPLICATION**

(43) Date of publication:
**20.09.2023 Bulletin 2023/38**

(21) Application number: **22193427.6**

(22) Date of filing: **01.09.2022**

(51) International Patent Classification (IPC):
**G01S 7/4863** (2020.01)   **G01S 7/4913** (2020.01)
**G01S 17/89** (2020.01)

(52) Cooperative Patent Classification (CPC):
**G01S 7/4863; G01S 7/4913; G01S 17/89**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.03.2022 JP 2022043107**

(71) Applicant: **KABUSHIKI KAISHA TOSHIBA**
**Minato-ku**
**Tokyo**
**105-0023 (JP)**

(72) Inventors:
• **Kondo, Satoshi**
**Tokyo 105-0023 (JP)**

• **Sai, Akihide**
**Tokyo 105-0023 (JP)**
• **Ta, Tuan Thanh**
**Tokyo 105-0023 (JP)**
• **Sugimoto, Toshiki**
**Tokyo 105-0023 (JP)**
• **Katagiri, Hisaaki**
**Tokyo 105-0023 (JP)**
• **Ota, Yutaka**
**Tokyo 105-0023 (JP)**

(74) Representative: **Hoffmann Eitle**
**Patent- und Rechtsanwälte PartmbB**
**Arabellastraße 30**
**81925 München (DE)**

(54) **DISTANCE MEASURING DEVICE AND DISTANCE MEASURING METHOD**

(57) A distance measuring device has a plurality of light receiving elements each of which receives a reflected optical signal reflected by an object, and an image processor that generates a distance image in accordance with distances to the object, based on signal intensities and light reception timings of the reflected optical signal received by the plurality of light receiving elements, wherein the image processor detects a direction of the object, based on at least either the signal intensities of the reflected optical signal received by the light receiving elements or the distances to the object measured based on the reflected optical signal, and divides at least one or some of pixels included in the distance image, based on the direction of the detected object.

FIG. 5

EP 4 246 178 A2

**Description**

FIELD

An example of the present invention relates to a distance measuring device and a distance measuring method.

BACKGROUND

A distance measuring device using the time of flight (ToF) method is widely used in which a distance to an object is measured in a non-contact manner by radiating an optical signal to the object and receiving a reflected optical signal from the object. In distance measuring device using the ToF method, an optical signal emitted from a light emission unit is scanned in a one-dimensional direction or a two-dimensional direction, whereby distances to an object located within a predetermined area are measured, and a distance image is generated. Each of the pixels of the distance image corresponds to the reflected optical signal received by an individual one of light receiving elements.

Each light receiving element corresponding to one of the pixels receives a reflected optical signal from a direction corresponding to the light receiving element, and, in some cases, a plurality of objects are located in that direction. In this case, distance information of a plurality of objects is contained in one pixel, and there is a possibility that each of the object is hardly identified.

To address this issue, it can be considered that, in a case where distance information of a plurality of objects is included in one pixel, the pixel is divided so that the distance information is obtained for each divided pixel area. However, orientations, shapes, and sizes of a plurality of objects located in the same direction are not necessarily the same. Therefore, if the division direction of the pixel is not appropriate, the disposition information of each object cannot be correctly measured.

BRIEF DESCRIPTION OF THE DRAWINGS

FIG. 1 is a block diagram illustrating a basic configuration of a distance measuring device;
FIG. 2 is a schematic perspective view illustrating an example in which a light receiving unit and a signal processing unit are mounted on a substrate and packaged;
FIG. 3A is a diagram illustrating an example in which a reflected optical signal from a plurality of objects is received by one pixel;
FIG. 3B is a diagram illustrating an output signal waveform of the light receiving element;
FIG. 4 is a diagram schematically illustrating pixel information on three pixels adjacent in the horizontal direction in a distance image;
FIG. 5 is a block diagram illustrating an example of an internal configuration of an image processing unit according to a first example;
FIG. 6 is a diagram illustrating an example of a processing operation of an object direction detection unit;
FIG. 7 is a diagram illustrating an example of a processing operation of a pixel division unit;
FIG. 8 is a block diagram illustrating an example of an internal configuration of an image processing unit according to a second example;
FIG. 9 is a diagram illustrating an example of a distance image on five pixels arranged in the horizontal direction;
FIG. 10 is a graph illustrating how a calculation result of an area of a first object in a third pixel varies in accordance with area percentages of the first object and the second object in the third pixel; and
FIG. 11 is a diagram illustrating a relationship between an area percentage of the second object in the third pixel and a variation in a calculation result of an area of the second object in the third pixel.

DETAILED DESCRIPTION

According one example a distance measuring device has:

a plurality of light receiving elements each of which receives a reflected optical signal reflected by an object;
an image processor that generates a distance image in accordance with distances to the object, based on signal intensities and light reception timings of the reflected optical signal received by the plurality of light receiving elements; and
an object direction detector (61) that detects a direction of the object, based on at least either the signal intensities of the reflected optical signal received by the light receiving elements or the distances to the object measured based on the reflected optical signal; and

a pixel divider (62) that divides at least one or some of pixels included in the distance image, based on the direction of the object detected by the object direction detector (61).

Hereinafter, examples of a distance measuring device and a distance measuring method will be described with reference to the drawings. Hereinafter, main components of a distance measuring device will be mainly described, but the distance measuring device may have components and functions that are not illustrated or described. The following description does not exclude components and functions that are not illustrated or d escribed.

(Basic Configuration of Distance Measuring Device)

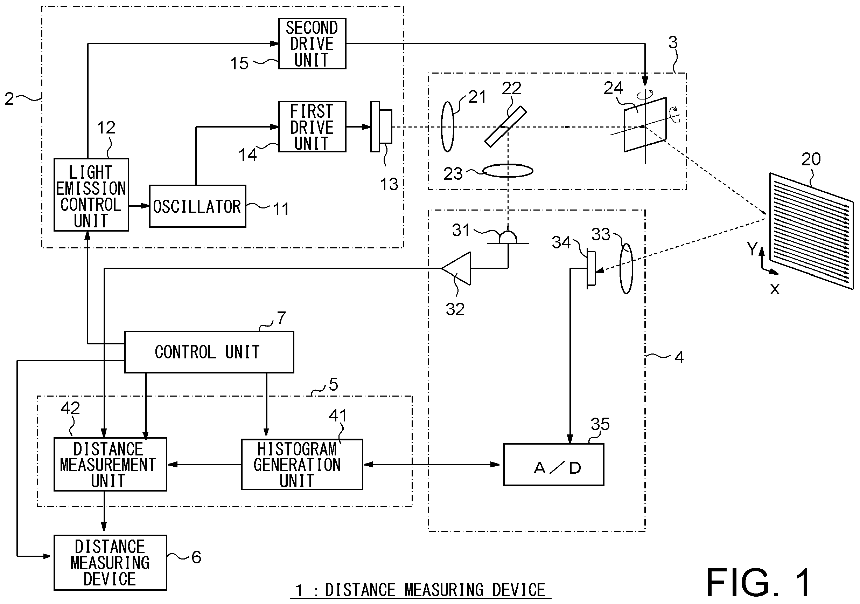

FIG. 1 is a block diagram illustrating a basic configuration of a distance measuring device 1. The distance measuring device 1 of FIG. 1 performs distance measurement by the time of flight (ToF) method. The distance measuring device 1 of FIG. 1 includes a light emission unit 2, a light control unit 3, a light receiving unit 4, a signal processing unit 5, an image processing unit 6, and a control unit 7.

At least a part of the distance measuring device 1 of FIG. 1 can be configured with one or a plurality of semiconductor integrated circuits (ICs). For example, the signal processing unit 5 and the image processing unit 6 may be integrated in one semiconductor chip, and the semiconductor chip may be integrated further including the light receiving unit 4. In addition, the semiconductor chip may be integrated further including the light emission unit 2.

The light emission unit 2 emits an optical signal. The optical signal is, for example, a laser light signal having a predetermined frequency band and a predetermined pulse width. The laser light is coherent light having a uniform phase and frequency. The light emission unit 2 intermittently emits an optical signal in a pulse form at a predetermined cycle. The cycle at which the light emission unit 2 emits the optical signal is a time interval equal to or longer than a time required for a distance measurement unit 42 to measure a distance on the basis of one pulse of the optical signal.

The light emission unit 2 includes an oscillator 11, a light emission control unit 12, a light emitting element 13, a first drive unit 14, and a second drive unit 15. The oscillator 11 generates an oscillation signal in accordance with the cycle at which the optical signal is emitted. The first drive unit 14 intermittently supplies power to the light emitting element 13 in synchronism with the oscillation signal. The light emitting element 13 intermittently emits an optical signal on the basis of the power from the first drive unit 14. The light emitting element 13 may be a laser element that emits a single laser light beam or a laser unit that simultaneously emits a plurality of laser light beams. The light emission control unit 12 controls the second drive unit 15 in synchronism with the oscillation signal. The second drive unit 15 supplies a drive signal synchronized with the oscillation signal to the light control unit 3 in accordance with an instruction from the light emission control unit 12.

The light control unit 3 controls a traveling direction of the optical signal emitted from the light emitting element 13. In addition, the light control unit 3 controls the traveling direction of the optical signal on the basis of the drive signal from the second drive unit 15.

The light control unit 3 includes a first lens 21, a beam splitter 22, a second lens 23, and a scanning mirror 24.

The first lens 21 condenses the optical signal emitted from the light emission unit 2 and guides the optical signal to the beam splitter 22. The beam splitter 22 branches the optical signal from the first lens 21 in two directions and guides the optical signal to the second lens 23 and the scanning mirror 24. The second lens 23 guides the split light from the beam splitter 22 to the light receiving unit 4. The reason for guiding the optical signal to the light receiving unit 4 is to detect a light emission timing by the light receiving unit 4.

The scanning mirror 24 rotationally drives a mirror surface in synchronism with the drive signal from the second drive unit 15 in the light emission unit 2. This controls a reflection direction of the split light (optical signal) having passed through the beam splitter 22 and then entering the mirror surface of the scanning mirror 24. By rotationally driving the mirror surface of the scanning mirror 24 at a constant cycle on the basis of the drive signal from the second drive unit 15, the optical signal emitted from the light control unit 3 can be scanned in at least a one-dimensional direction within a predetermined range. By providing shafts for rotationally driving the mirror surface in two directions, it is also possible to scan the optical signal emitted from the light control unit 3 in a two-dimensional direction within a predetermined range. FIG. 1 illustrates an example in which the scanning mirror 24 causes the optical signal emitted from the distance measuring device 1 to scan in an X direction and a Y direction.

In a case where an object 20 is present within a scanning area of the optical signal emitted from the distance measuring device 1, the optical signal is reflected by the object 20. At least a part of the reflected light reflected by the object 20 is received by the light receiving unit 4.

The light receiving unit 4 includes a photodetector 31, an amplifier 32, a third lens 33, a light receiving element 34, and an A/D converter 35. The photodetector 31 receives the light branched by the beam splitter 22 and converts the light into an electric signal. The photodetector 31 can detect the light emission timing of the optical signal. The amplifier 32 amplifies the electric signal that is output from the photodetector 31.

The third lens 33 forms an image of the laser light reflected by the object 20 on the light receiving element 34. The light receiving element 34 receives the laser light and converts the laser beam into an electric signal. The light receiving element 34 is, for example, a silicon photon avalanche diode (SPAD). In the SPAD, an avalanche photo-diode (APD) is made to operate in Geiger mode, and can output an electric signal obtained by photoelectrically converting a single received photon. Actually, a plurality of light receiving elements 34 are arranged in a one-dimensional or a two-dimensional direction. One SPAD may constitute one pixel, or two or more SPADs may constitute one pixel. The unit of one pixel is also called a silicon photomultiplier (SiPM).

The A/D converter 35 samples the electric signal output from the light receiving element 34 at a predetermined sampling rate to perform A/D conversion, and generates a digital signal. Instead of the A/D converter 35, a time-to-digital converter (TDC) may be provided.

The signal processing unit 5 includes a histogram generation unit 41 and the distance measurement unit 42. On the basis of the digital signal generated by the A/D converter 35, the histogram generation unit 41 generates a histogram that is a temporal distribution of a signal intensity of a reflected optical signal received by the light receiving unit 4.

The distance measurement unit 42 determines a timing at which a time frequency of the histogram is at its maximum to be a light reception timing of the reflected optical signal, and measures the distance to the object on the basis of a time difference between the light reception timing and the timing at which the light emission unit 2 emits the optical signal. More specifically, the distance measurement unit 42 measures the distance to the object 20 on the basis of following Equation 1.

$$\text{Distance} = \text{light speed} \times (\text{light reception timing of reflected light} - \text{light emission timing of optical signal})/2 \qquad \text{Equation 1}$$

The "light reception timing of reflected light" in Equation 1 is more precisely the light reception timing which is obtained from the histogram and at which the signal intensity of the reflected optical signal is the maximum.

The image processing unit 6 generates a distance image on the basis of the distances to the object measured by the distance measurement unit 42. The distance image includes a plurality of pixels, and each pixel represents distance information based on the reflected optical signal received by the corresponding light receiving element 34. The distance measuring device 1 according to the present example is characterized by a processing operation of the image processing unit 6, and details thereof will be described later.

The control unit 7 controls the light emission unit 2, the light receiving unit 4, the signal processing unit 5, and the image processing unit 6. Specifically, the control unit 7 controls the timing at which the light emission unit 2 emits an optical signal, and also controls to cause the light receiving unit 4 to receive a reflected optical signal and to generate a digital signal. The control unit 7 may further control a time resolution with which the A/D converter 35 in the light receiving unit 4 performs A/D conversion. In addition, the control unit 7 controls to cause the histogram generation unit 41 in the signal processing unit 5 to generate a histogram and controls to cause the distance measurement unit 42 to measure the distance to the object. The control unit 7 further controls to cause the image processing unit 6 to generate a distance image.

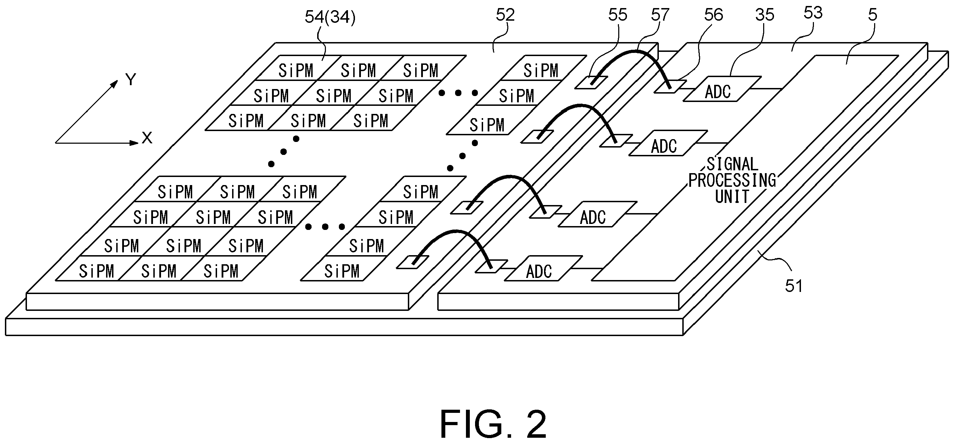

At least a part of the distance measuring device 1 in FIG. 1 can be assembled by using a silicon in package (SiP). FIG. 2 is a schematic perspective view illustrating an example in which the light receiving unit 4 and the signal processing unit 5 are mounted on a substrate and packaged. A first die 52 and a second die 53 are provided on a substrate 51 of FIG. 2. On the first die 52 there are disposed the light receiving elements 34 in the light receiving unit 4 of FIG. 1. The light receiving elements 34 are each an SiPM 54 including one or more SPADs. A plurality of SiPMs 54 are arranged in each of the X direction and the Y direction. On the second die 53 there are disposed A/D converters (ADC) 35, which are included in the light receiving unit 4 of FIG. 1, and the signal processing unit 5. Pads 55 on the first die 52 and pads 56 on the second die 53 are connected to each other by bonding wires 57.

In the layout diagram of FIG. 2, the plurality of SiPMs 54 are arranged on the first die 52, and active quenching circuits or passive quenching circuits for shortening dead times of the APDs may be arranged in association with the respective SiPMs 54. In addition, the image processing unit 6 may be mounted on the second die 53.

The distance measuring device 1 of FIG. 1 is also referred to as a light detection and ranging (LiDAR). Each pixel constituting the distance image includes distance information to the object obtained by receiving the reflected optical signal from its corresponding direction. The reflected optical signal received by each pixel is not necessarily an optical signal reflected by a single object, and sometimes can include optical signals reflected by a plurality of objects.

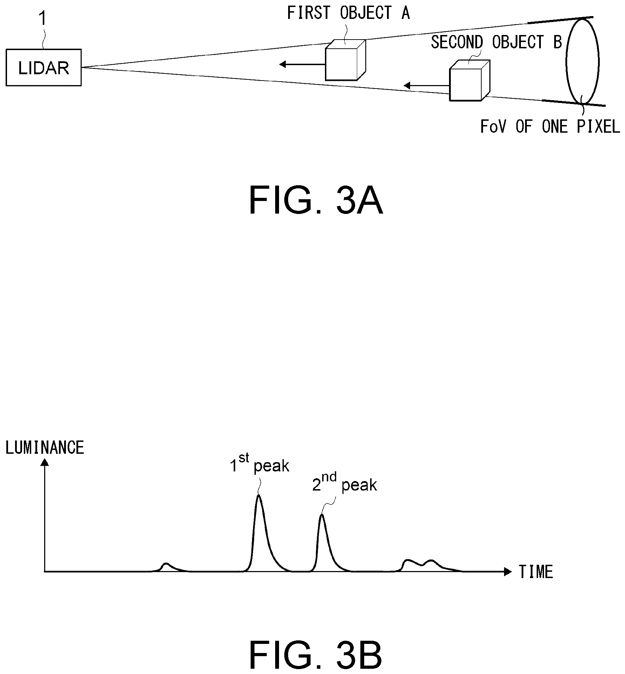

FIG. 3A is a diagram illustrating an example in which a reflected optical signal from a plurality of objects is received by one pixel, and FIG. 3B is a diagram illustrating an output signal waveform of the light receiving element 34. A first object A and a second object B in the field of view (FoV) of one pixel are disposed at different distances in the same direction from the distance measuring device 1. In this case, the output signal of the light receiving element 34 that receives the reflected optical signal in this direction has a waveform as illustrated in FIG. 3B. Since the first object A is disposed at a position closer to the distance measuring device 1 than the second object B is, the light receiving element 34 receives the reflected optical signal from the first object A as a first echo signal, and then receives the reflected optical signal from the second object B as a second echo signal. As illustrated in the figure, a peak value of a signal intensity of the first echo signal is larger than a peak value of a signal intensity of the second echo signal.

In addition, the light receiving element 34 also receives an ambient optical signal such as sunlight. Since a signal level of the ambient optical signal is usually much smaller than a signal level of the reflected optical signal, the ambient optical signal can be removed by a filling process or the like, but since the signal level of the reflected optical signal from an object located far away is accordingly smaller, it may be difficult to distinguish the ambient optical signal.

The light receiving element 34 receives the first echo signal and the second echo signal from the first object A and the second object B located in the same direction as illustrated in FIG. 3A, and the light receiving element 34 then transmits to the A/D converter 35 a voltage signal corresponding to the first echo signal and a voltage signal corresponding to the second echo signal. The A/D converter 35 generates a digital signal in accordance with each of the first echo signal and the second echo signal. The distance measurement unit 42 in the signal processing unit 5 measures the distance to the first object A on the basis of the light reception timing of the first echo signal, and measures the distance to the second object B on the basis of the light reception timing of the second echo signal. The image processing unit 6 generates a distance image including distance information of the first object A and distance information of the second object B.

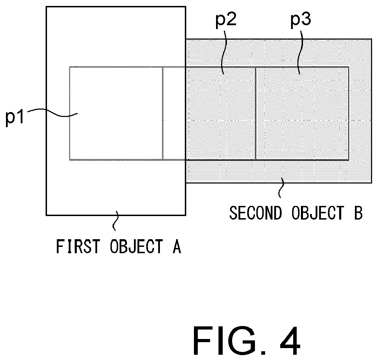

FIG. 4 is a diagram schematically illustrating pixel information of three pixels p1, p2, and p3 adjacent in the horizontal direction in the distance image. The entire area of the pixel p1 includes distance information based on the reflected optical signal from the first object A. The entire area of the pixel p3 includes distance information based on the reflected optical signal from the second object B. On the other hand, a part of the area of the pixel p2 includes distance information based on the reflected optical signal from the first object A, and a remaining part of the area of the pixel p2 includes distance information based on the reflected optical signal from the second object B.

As described above, in the example of FIG. 4, since the pixel p2 includes the distance information based on the reflected optical signal from the first object A and the distance information based on the reflected optical signal from the second object B, there is a possibility that it is not possible to accurately grasp on which object the distance information included in the pixel p2 is based. Therefore, in the present example, in the case where distance information of a plurality of objects is included in one pixel as in the pixel p2, the pixel is divided to improve resolution.

(First example)

A distance measuring device 1 according to a first example has a block configuration similar to that in FIG. 1, but has a feature in an internal configuration of the image processing unit 6.

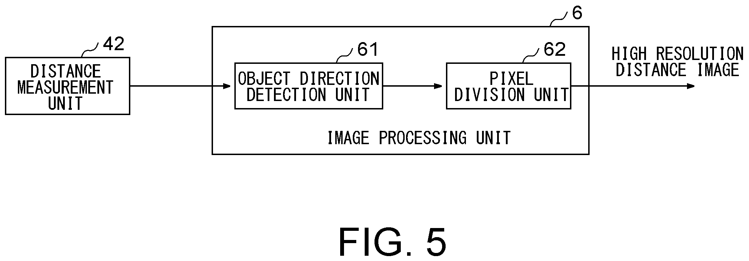

FIG. 5 is a block diagram illustrating an example of the internal configuration of the image processing unit 6 according to the first example. The image processing unit 6 according to the first example includes an object direction detection unit 61 and a pixel division unit 62.

Distance information for each pixel measured by the distance measurement unit 42 is input to the object direction detection unit 61. The object direction detection unit 61 detects a direction of the object on the basis of at least one of the signal intensity of the reflected optical signal received by the light receiving element 34 and a distance to the object measured on the basis of the reflected optical signal.

The pixel division unit 62 divides at least one or some pixels constituting the distance image on the basis of the direction of the object detected by the object direction detection unit 61. The pixel division unit 62 divides a pixel including distance information of a plurality of objects.

The object direction detection unit 61 detects the direction of at least one of the two or more objects on the basis of at least either the signal intensity of the reflected optical signal from the two or more objects received by the light receiving element 34 or the distances to the two or more objects measured on the basis of the reflected optical signal. The pixel division unit 62 divides a pixel including distance information of two or more objects on the basis of the direction of at least one of the two or more objects.

The pixel division unit 62 may perform pixel division, depending on positions of individual objects in a pixel including distance information of two or more objects. For example, as will be described later, in the case where the distance information of another object is included in an upper right part in one pixel, the upper right part may be divided and the distance information of another object may be allocated.

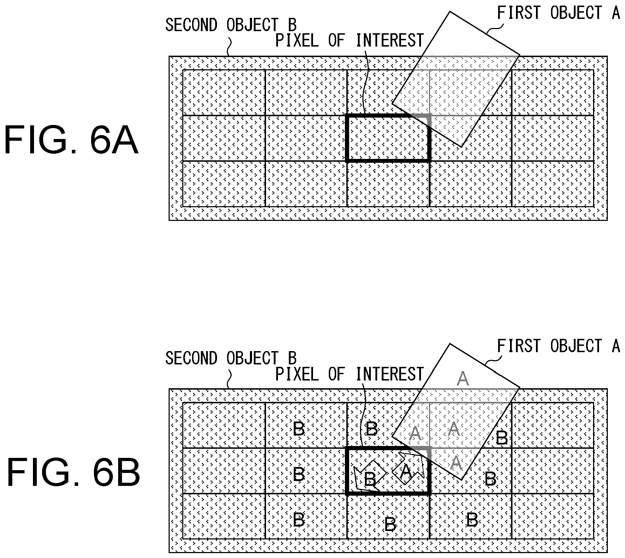

FIG. 6 is a diagram illustrating an example of a processing operation of the object direction detection unit 61. FIG. 6A illustrates a state in which the distance information of the first object A and the distance information of the second object B overlap each other in some pixels. In the example of FIG. 6A, the first object A is disposed in a direction inclined with respect to the longitudinal direction of the second object B. Each grid-shaped frame in FIG. 6A represents a pixel.

FIG. 6B is a diagram in which signs are written in around a pixel of interest indicated by a thick frame as follows. Sign A is written in a pixel including the distance information of the first object A, and sign B is written in a pixel including the distance information of the second object B. Most part of the pixel of interest in FIGS. 6A and 6B includes the distance information of the second object B, but the upper right part in the pixel of interest includes the distance information of the first object A. Therefore, as illustrated in FIG. 6B, the object direction detection unit 61 detects an upper right direction from the pixel of interest as the direction of the first object A. The direction of the first object A can be detected on the basis of how the pixels denoted as A are disposed.

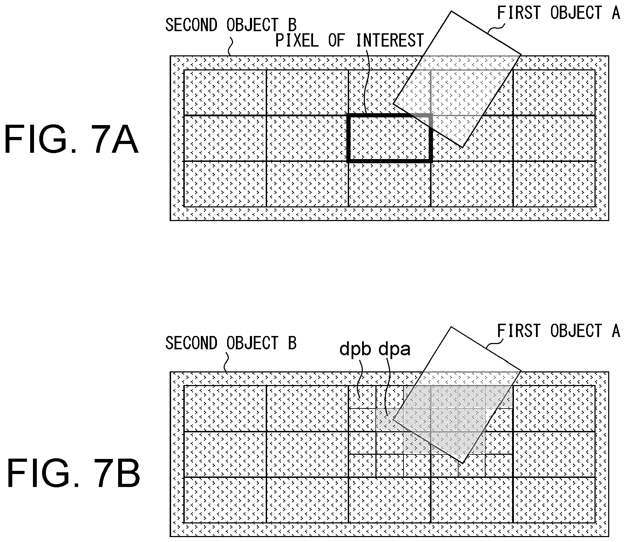

FIG. 7 is a diagram illustrating an example of a processing operation of the pixel division unit 62. FIG. 7A is the same as FIG. 6A. As illustrated in FIG. 7B, the pixel division unit 62 divides pixels including the area where the first object A overlaps the second object B, thereby providing a plurality of divided pixels dpa and dpb that are smaller than the pixel size. Some of the divided pixels dpa are allocated to the first object A, and the remaining divided pixels dpb are allocated to the second object B. More specifically, the divided pixels dpa overlapping with the first object A are allocated to the first object A. The divided pixels dpa allocated to the first object A are disposed in a direction inclined from the longitudinal direction of the second object B, and the direction of the first object A can be detected by how the divided pixels dpa are disposed.

As described above, in the distance measuring device 1 according to the first example, in the case where distance information of a plurality of objects is included in pixels constituting a distance image, a direction of an overlapping object is detected, and the pixels are divided in accordance with the direction of the object. Consequently, the pixels can be divided depending on how the objects overlap with each other, and the resolution of the distance image can be improved.

In the present example, instead of dividing all the pixels constituting the distance image, the pixel division is performed only on the pixels including the distance information of a plurality of objects, so that the resolution of the distance image can be increased without extremely increasing a data amount of the distance image.

(Second example)

In a second example, in the case where distance information of a plurality of objects is included in one pixel, an area of each object in the one pixel is calculated.

A distance measuring device 1 according to a second example has a block configuration similar to that in FIG. 1, but an internal configuration of the image processing unit 6 is different from that of FIG. 5.

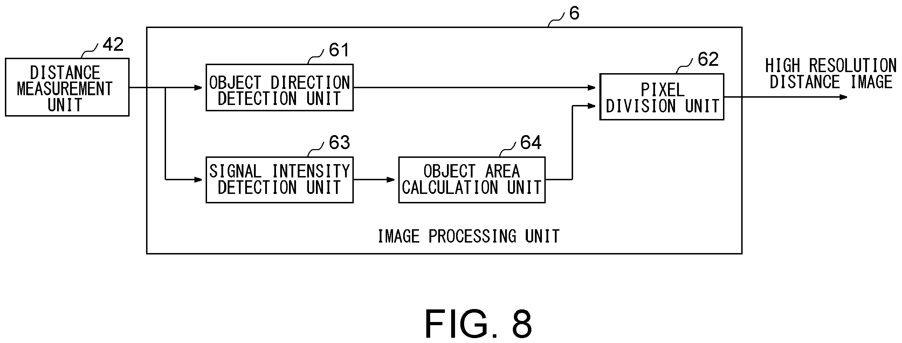

FIG. 8 is a block diagram illustrating an example of an internal configuration of an image processing unit 6 according to the second example. The image processing unit 6 of FIG. 8 includes an object direction detection unit 61, a pixel division unit 62, a signal intensity detection unit 63, and an object area calculation unit 64.

The object direction detection unit 61 in FIG. 8 is the same as the object direction detection unit 61 in FIG. 5 and detects a direction of an object on the basis of at least one of a signal intensity of the reflected optical signal received by the light receiving element 34 and a distance to the object measured on the basis of the reflected optical signal.

The signal intensity detection unit 63 detects a signal intensity of the reflected optical signal received by the light receiving element 34. The signal intensity corresponds to luminance information of each pixel signal constituting the distance image.

The object area calculation unit 64 calculates, on the basis of a signal intensity detected by the signal intensity detection unit 63, an area of an object in the pixel corresponding to the light receiving element 34 that received the reflected optical signal.

The pixel division unit 62 divides the pixel on the basis of the direction of the object detected by the object direction detection unit 61 and the area of the object in the pixel calculated by the object area calculation unit 64.

In the case where distance information of a plurality of objects is included in one pixel, the object area calculation unit 64 calculates an area of a specific object on the basis of a result of calculating each of areas of the plurality of objects included in the one pixel or calculates the area of the specific object included in the one pixel without considering areas of objects other than the specific object included in the one pixel.

More specifically, the object area calculation unit 64 calculates the areas of the plurality of objects included in the one pixel on the basis of area percentages of the plurality of objects in the one pixel, or calculates the area of the specific object included in the one pixel without considering an area of any object other than the specific object included in the one pixel. In the case where distance information of a plurality of objects is included in one pixel, the object area calculation unit 64 calculates the area of each of the plurality of objects included in the one pixel by comparing the signal intensities of the reflected optical signal from the plurality of objects.

The object area calculation unit 64 may include a first calculation unit, a second calculation unit, and a third calculation unit.

For example, the first calculation unit calculates the proportion of the signal intensity of the light receiving element 34 corresponding to a second pixel in the case where the first object A is included in a part in the second pixel, to the signal intensity of the light receiving element 34 corresponding to a first pixel in the case where the distance information of the first object A is included in the entire area in the first pixel. The first calculation unit calculates the first term of the numerator on the right-hand side of Equation 5 to be described later.

For example, the second calculation unit calculates a proportion of the signal intensity of the light receiving element 34 corresponding to the second pixel in the case where the second object B is included in a part in the second pixel, to the signal intensity of the light receiving element 34 corresponding to a third pixel in the case where the second object B is included in the entire area in the third pixel. The second calculation unit calculates the second term in the numerator on the right-hand side of Equation 5 to be described later.

For example, the third calculation unit calculates an area proportion of at least one of the first object A and the second object B in the second pixel on the basis of the proportion calculated by the first calculation unit and the proportion calculated by the second calculation unit. The third calculation unit calculates Equation 5 to be described later.

The object area calculation unit 64 may further include a fourth calculation unit. For example, the fourth calculation unit calculates a value obtained by subtracting the proportion calculated by the second calculation unit from 1. The third calculation unit calculates an area proportion of the first object A in the second pixel on the basis of the proportion calculated by the first calculation unit and the proportion calculated by the fourth calculation unit. The fourth calculation unit performs an alternative calculation for the second term in the numerator on the right-hand side of Equation 5 to be described later.

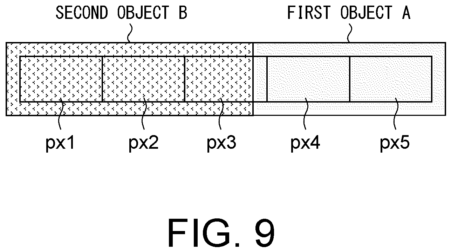

FIG. 9 is a diagram illustrating an example of a distance image on five pixels arranged in the horizontal direction. Hereinafter, the five pixels are referred to as the first pixel px1 to fifth pixel px5. FIG. 9 illustrates an example in which the fourth pixel px4 and the fifth pixel px5 include only the distance information of the first object A, the first pixel px1 and the second pixel px2 include only the distance information of the second object B, and the third pixel px3 includes the distance information of the first object A and the second object B. It is assumed that the first object A is positioned closer to the distance measuring device 1 than the second object B is.

The object area calculation unit 64 calculates an area proportion p3_A_area of the first object A in the third pixel px3 on the basis of following Equation 2. The area proportion p3_A_area is an area proportion of the first object A in the third pixel px3 when the area of the third pixel px3 is 1.

In Equation 2, the signal intensity of the reflected optical signal from the first object A in the third pixel px3 is p3_A_1st_return, the average value of the signal intensities of the fourth pixel px4 and the fifth pixel px5 is p4_p5_avr, the signal intensity of the reflected optical signal from the second object B in the third pixel px3 is p3_B_2nd_return, and the average value of the signal intensities of the first pixel px1 and the second pixel px2 is p1_p2_avr.

$$p3\_A\_area = \frac{\frac{p3\_A\_1st\_return}{p4\_p5\_avr} + \left(1 - \frac{p3\_B\_2nd\_return}{p1\_p2\_avr}\right)}{2} \quad \cdots (2)$$

The first term of the numerator on the right-hand side of Equation 2 is a proportion of the signal intensity of the reflected optical signal from the first object A of the third pixel px3, to the average value of the signal intensities of the reflected optical signal from the first object A of the fourth pixel px4 and the fifth pixel px5. That is, the first term of the numerator on the right-hand side of Equation 2 represents the area proportion of the first object A in the third pixel px3.

The terms inside the parentheses in the numerator on the right-hand side of Equation 2 is a value obtained by subtracting from 1 a proportion of the signal intensity of the reflected optical signal from the second object B of the third pixel px3, to the average value of the signal intensities of the reflected optical signal from the second object B of the first pixel px1 and the second pixel px2. That is, the terms inside the parentheses in the numerator on the right-hand side of Equation 2 is a value obtained by subtracting from 1 the area proportion of the second object B in the third pixel px3, and represents the area proportion of the first object A in the third pixel px3.

As described above, Equation 2 calculates an average value of the area proportion of the first object A in the third pixel px3 obtained from the reflected optical signal of the first object A and the area proportion of the first object A in the third pixel px3 obtained from the reflected optical signal of the second object B.

Instead of calculating the area proportion p3_A_area of the first object A in the third pixel px3 on the basis of Equation 2, there can be considered a comparative example in which the area proportion p3_A_area of the first object A in the third pixel px3 is calculated on the basis of following Equation 3 or Equation 4.

$$p3\_A\_area = \frac{p3\_A\_1st\_return}{p4\_p5\_avr} \quad \cdots (3)$$

$$p3\_A\_area = 1 - \frac{p3\_B\_2nd\_return}{p1\_p2\_avr} \quad \cdots (4)$$

Equation 3 is the first term of the numerator on the right-hand side of Equation 2 and is the proportion of the signal intensity of the reflected optical signal from the first object A of the third pixel px3, to the average value of the signal intensities of the reflected optical signal from the first object A of the fourth pixel px4 and the fifth pixel px5. Equation 4 is the terms inside the parentheses in the numerator on the right-hand side of Equation 2 and is the value obtained by subtracting from 1 the proportion of the signal intensity of the reflected optical signal from the second object B of the third pixel px3, to the average value of the signal intensities of the reflected optical signal from the second object B of the first pixel px1 and the second pixel px2.

Equation 3 obtains the area proportion p3_A_area of the first object A in the third pixel px3 by comparing the signal intensity of the third pixel px3 with the signal intensities of the fourth pixel px4 and the fifth pixel px5, but does not consider the signal intensity of the first pixel px1 or the second pixel px2. Equation 4 obtains the area proportion p3_A_area of the first object A in the third pixel px3 by comparing the signal intensity of the third pixel px3 with the signal intensities of the first pixel px1 and the second pixel px2, but does not consider the signal intensity of the fourth pixel px4 or the fifth pixel px5.

In contrast, Equation 2 obtains the area proportion p3_A_area of the first object A in the third pixel px3, considering the result of comparing the signal intensity of the third pixel px3 with the signal intensities of the fourth pixel px4 and the fifth pixel px5 and the result of comparing the signal intensity of the third pixel px3 with the signal intensities of the first pixel px1 and the second pixel px2. Therefore, there is a high possibility that the area proportion p3_A_area of the first object A in the third pixel px3 is calculated more accurately by Equation 2 than by Equation 3 or Equation 4.

Note that, as will be described later, depending on the area percentages of the first object A and the second object B included in the third pixel px3, the area proportion of the first object A in the third pixel px3 can be sometimes more accurately calculated by Equation 3 or Equation 4 than by Equation 2. This will be described later.

In the example of FIG. 9, the third pixel px3 includes the distance information of the first object A and the second object B. Therefore, an area proportion p3_B_area of the second object B in the third pixel px3 can be calculated by subtraction of the area proportion p3_A_area, calculated by Equation 2, of the first object A in the third pixel px3.

In Equation 2, the area proportion p3_A_area of the first object A in the third pixel px3 is calculated, but the area proportion p3_B_area of the second object B in the third pixel px3 may be calculated on the basis of following Equation 5.

$$p3\_B\_area = \frac{\left(1 - \frac{p3\_A\_1st\_return}{p4\_p5\_avr}\right) + \frac{p3\_B\_2nd\_return}{p1\_p2\_avr}}{2} \quad \cdots (5)$$

Alternatively, the area proportion p3_B_area of the second object B in the third pixel px3 may be calculated by following Equation 6 or Equation 7.

$$p3\_B\_area = 1 - \frac{p3\_A\_1st\_return}{p4\_p5\_avr} \quad \cdots (6)$$

$$p3\_B\_area = \frac{p3\_B\_2nd\_return}{p1\_p2\_avr} \quad \cdots (7)$$

In Equation 2, the average value of the following two values is calculated: the proportion of the signal intensity of the reflected optical signal from the first object A of the third pixel px3, to the average value of the signal intensities of the reflected optical signal from the first object A of the fourth pixel px4 and the fifth pixel px5; and the proportion of the signal intensity of the reflected optical signal from the first object A of the third pixel px3, to the average value of the signal intensities of the reflected optical signal from the first object A in the first pixel px1 and the second pixel px2. However, instead of calculating the average value of these two proportions, a root mean square (RMS) of these two proportions may be calculated. In addition, a final area proportion may be calculated in consideration of both the average value and the root mean square. The same applies to Equation 5, and the root mean square may be calculated, or the final area proportion may be calculated in consideration of both the average value and the root mean square.

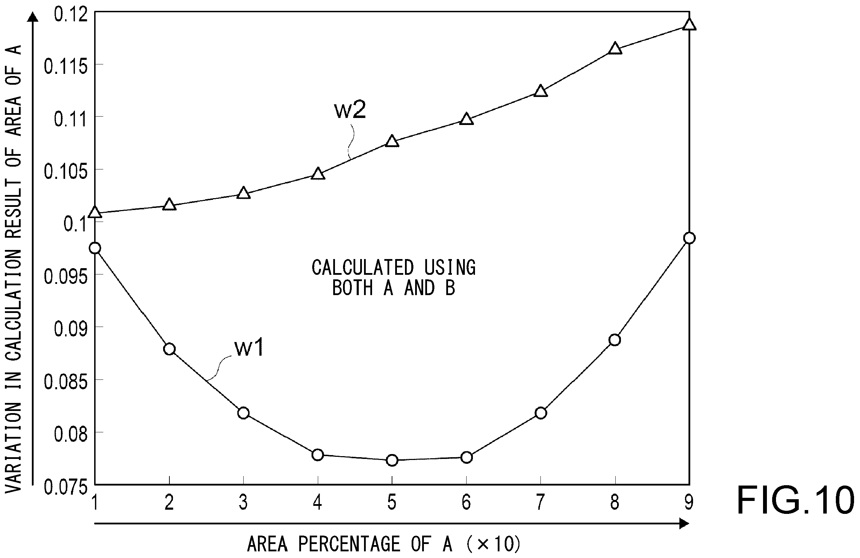

FIG. 10 is a graph illustrating how a calculation result of the area of the first object A in the third pixel px3 varies, in the example of FIG. 9, depending on the area percentages of the first object A and the second object B in the third pixel px3. In FIG. 10, the horizontal axis represents the area percentage of the first object A in the third pixel px3, and the vertical axis represents the variation in the area of the first object A in the third pixel px3. A larger value on the vertical axis indicates a larger variation in the area of the first object A within the third pixel px3. FIG. 10 illustrates a simulation result.

FIG. 10 illustrates the curve w1 obtained by calculating the area proportion of the first object A in the third pixel px3 on the basis of Equation 2 and the curve w2 obtained by calculating the area proportion of the first object A in the third pixel px3 on the basis of Equation 3 or Equation 4.

As illustrated by the curves w1 and w2 in FIG. 10, in the case where there is not so much difference in the area percentage between the first object A and the second object B in the third pixel px3, the area of the first object A in the third pixel px3 can be accurately calculated by calculating the area proportion of the first object A in the third pixel px3 on the basis of Equation 2. In contrast, in the case where there is a large imbalance between the area percentages of the first object A and the second object B in the third pixel px3, if the area proportion of the first object A in the third pixel px3 is calculated on the basis of Equation 2, the variation in the area of the first object A in the third pixel px3 is larger.

In addition, when the area proportion of the first object A in the third pixel px3 is calculated on the basis of Equation 3 or Equation 4, the variation in the area of the first object A in the third pixel px3 becomes larger as the area percentage of the first object A in the first pixel px1 becomes larger.

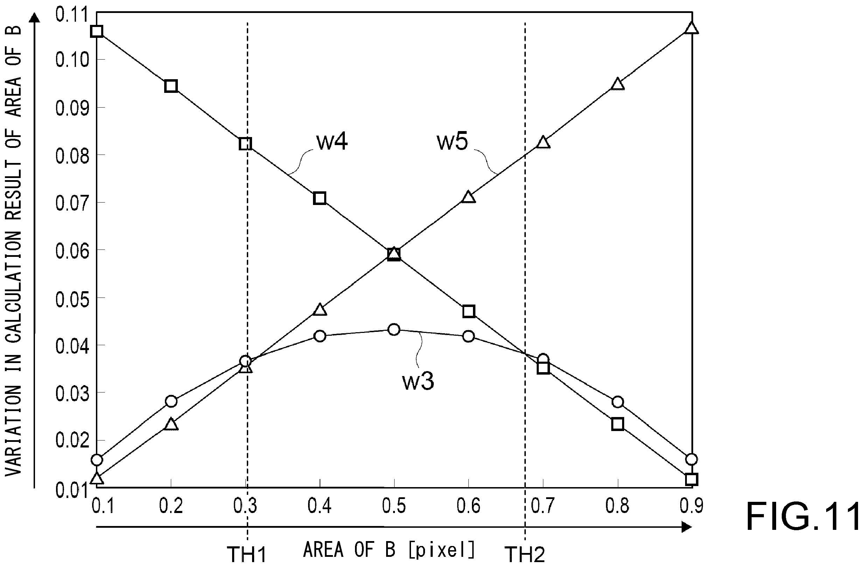

FIG. 11 is a diagram illustrating the relationship, in the example of FIG. 9, between the area percentage of the second object B in the third pixel px3 and the variation in the calculation result of the area of the second object B in the third pixel px3. In FIG. 11, the horizontal axis represents the area percentage of the second object B in the third pixel px3, and the vertical axis represents the variation in the calculation result of the area of the second object B in the third pixel px3. FIG. 11 illustrates the curve w3 obtained by calculating the area proportion of the second object B in the third pixel px3 on the basis of Equation 5, the curve w4 obtained by calculating the area proportion of the first object A in the third pixel px3 on the basis of Equation 3 or Equation 4, and the curve w5 obtained by calculating the area proportion of the second object B in the third pixel px3 on the basis of Equation 6 or Equation 7.

As illustrated in FIG. 11, in the case where the area percentage of the second object B in the third pixel px3 is less than a first threshold value TH1, it is desirable to calculate the area proportion of the second object B in the third pixel px3 on the basis of Equation 6 or Equation 7. In the case where the area percentage of the second object B in the third pixel px3 is equal to or more than the first threshold value TH1 and less than a second threshold value TH2, it is desirable to calculate the area proportion of the second object B in the third pixel px3 on the basis of Equation 5. Furthermore, in the case where the area percentage of the second object B in the third pixel px3 is equal to or more than the second threshold value TH2, it is desirable to calculate the area proportion of the second object B in the third pixel px3 on the basis of Equation 3 or Equation 4.

As described above, in the distance measuring device 1 according to the second example, the object direction detection unit 61, the signal intensity detection unit 63, the object area calculation unit 64, and the pixel division unit 62 are provided in the image processing unit 6. With respect to a pixel including distance information of a plurality of objects, the object area calculation unit 64 calculates an area proportion of each object in the pixel on the basis of the signal intensities of the reflected optical signal received by the light receiving element 34. The pixel division unit 62 performs pixel division on the basis of a direction of the object detected by the object direction detection unit 61 and an area of the object in the pixel calculated by the object area calculation unit 64. As a result, the pixel division can be performed in consideration of an overlapping state of the plurality of objects in the pixel; therefore, the resolution of the pixel including the distance information of the plurality of objects in a distance image can be improved, and visibility of the distance image is improved.

Furthermore, in the second example, with respect to the pixel including distance information of the plurality of objects, the area proportion of each object is calculated in consideration of the distance information of the objects included in the surrounding pixels, and pixel division is performed on the basis of the calculation result. As a result, the pixel division can be performed in accordance with the position and direction of the object.

At least a part of the distance measuring device 1 described in the above-described examples may be configured with hardware or software. In the case where software is used to configure, a program that realizes at least some functions of the distance measuring device 1 may be stored in a recording medium such as a flexible disk or a compact disc-read only memory (CD-ROM) and be read and executed by a computer. The recording medium is not limited to a removable recording medium such as a magnetic disk or an optical disk, and may be a fixed recording medium such as a hard disk device or a memory.

In addition, a program that implements at least some of the functions of the distance measuring device 1 may be distributed via a communication line (including wireless communication) such as the Internet. Further, the program may be distributed, in an encrypted, modulated, or compressed state, via a wired line or a wireless line such as the Internet or in a state being stored in a recording medium.

While certain examples have been described, these examples have been presented by way of example only, and are not intended to limit the scope of the disclosures. Indeed, the novel methods and systems described herein may be embodied in a variety of other forms; furthermore, various omissions, substitutions and changes in the form of the methods and systems described herein may be made without departing from the spirit of the disclosures. The accompanying claims and their equivalents are intended to cover such forms or modifications as would fall within the scope and spirit of the disclosures.

**Claims**

1.  A distance measuring device (1) comprising:

    a plurality of light receiving elements (34) each of which receives a reflected optical signal reflected by an object;
    an image processor (6) that generates a distance image in accordance with distances to the object, based on signal intensities and light reception timings of the reflected optical signal received by the plurality of light receiving elements (34); and
    an object direction detector (61) that detects a direction of the object, based on at least either the signal intensities of the reflected optical signal received by the light receiving elements (34) or the distances to the object measured based on the reflected optical signal; and
    a pixel divider (62) that divides at least one or some of pixels included in the distance image, based on the direction of the object detected by the object direction detector (61).

2.  The distance measuring device (1) according to claim 1, wherein the pixel divider (62) divides, among pixels included in the distance image, a pixel including distance information of two or more objects.

3.  The distance measuring device (1) according to claim 2, wherein the object direction detector (61) detects a direction of at least one of the two or more objects, based on at least either signal intensities of the reflected optical signal from the two or more objects received by the light receiving elements (34) or distances to the two or more objects measured based on the reflected optical signal, and
    the pixel divider (62) divides the pixel including the distance information of the two or more objects, based on the direction of the at least one of the two or more objects.

4.  The distance measuring device (1) according to claim 3, wherein the pixel divider (62) divides the pixel including the distance information of the two or more objects, depending on positions of individual ones of the two or more objects in the pixel including the distance information of the two or more objects.

5.  The distance measuring device (1) according to any of claims 1-4, further comprising:

    a signal intensity detector (63) that detects the signal intensities of the reflected optical signal received by the light receiving elements (34); and
    an object area calculator (64) that calculates an area of the object in a pixel corresponding to the light receiving element that has received the reflected optical signal, based on the signal intensities detected by the signal intensity detector (63),
    wherein the pixel divider (62) divides at least one or some of the pixels included in the distance image, based on the direction of the object detected by the object direction detector (61) and the area of the object in the pixel calculated by the object area calculator (64).

6.  The distance measuring device (1) according to claim 5, wherein in a case where distance information of a plurality of objects is included in one pixel, the object area calculator (64) calculates an area of a specific object, based on a result of calculating each of areas of the plurality of objects included in the one pixel or calculates the area of the specific object included in the one pixel without considering an area of any object other than the specific object included in the one pixel.

7.  The distance measuring device (1) according to claim 6, wherein the object area calculator (64) calculates each of the areas of the plurality of objects included in the one pixel, based on area percentages of the plurality of objects included in the one pixel or calculates the area of the specific object included in the one pixel without considering an area of any object other than the specific object included in the one pixel.

8.  The distance measuring device (1) according to any of claims 5-7, wherein in a case where distance information of a plurality of objects is included in one pixel, the object area calculator (64) calculates each of areas of the plurality of objects included in the one pixel by comparing signal intensities of the reflected optical signal from the plurality of objects.

9. The distance measuring device (1) according to claim 7 or 8, wherein the object area calculator (64) comprises:

a first calculator that calculates a proportion of a signal intensity of the light receiving element corresponding to a second pixel in a case where the first object is included in a part in the second pixel, to a signal intensity of the light receiving element corresponding to a first pixel in a case where distance information of the first object is included in an entire area in the first pixel; and
a second calculator that calculates a proportion of a signal intensity of the light receiving element corresponding to the second pixel in a case where the second object is included in a part in the second pixel, to a signal intensity of the light receiving element corresponding to the third pixel in a case where the second object is included in an entire area in the third pixel; and
a third calculator that calculates an area proportion of at least one of the first object and the second object in the second pixel, based on the proportion calculated by the first calculator and the proportion calculated by the second calculator.

10. The distance measuring device (1) according to claim 9, wherein the object area calculator (64) comprises a fourth calculator that calculates a value obtained by subtracting from 1 the proportion calculated by the second calculator, and
the third calculator calculates the area proportion of the first object in the second pixel, based on the proportion calculated by the first calculator and the value calculated by the fourth calculator.

11. The distance measuring device (1) according to claim 10, wherein the third calculator calculates the area proportion of the first object in the second pixel, based on at least one of an average value or a root mean square of the proportion calculated by the first calculator and the proportion calculated by the fourth calculator.

12. The distance measuring device (1) according to any of claims 1-11, further comprising a distance measurer (42) that measures a distance to the object, based on a time difference between a timing at which the reflected optical signal is received by the light receiving elements (34) and a timing at which a light emitter emitted an optical signal toward the object.

13. The distance measuring device (1) according to claim 12, wherein the distance measurer (42) measures the distance for each of pixels divided by the pixel divider (62), and
the image processor (6) generates the distance image having a resolution corresponding to the pixels divided by the pixel divider (62).

14. The distance measuring device (1) according to claim 12 or 13, further comprising the light emitter that emits the optical signal.

15. A distance measuring method comprises:

receiving, by a light receiving element provided in each of a plurality of pixels arranged in a one-dimensional direction or a two-dimensional direction, a reflected optical signal reflected by an object;
detecting a direction of the object, based on at least either signal intensities of the reflected optical signal received by the light receiving elements (34) or distances to the object measured based on the reflected optical signal; and
dividing at least one or some of the plurality of pixels, based on the detected direction of the object.

1 : DISTANCE MEASURING DEVICE

FIG. 1

5

53

35

56

57

55

52

54(34)

ADC

ADC

ADC

ADC

SiPM

SIGNAL PROCESSING UNIT

51

Y

X

FIG. 2

FIG. 3A

FIG. 3B

p2   p3

p1

FIRST OBJECT A

SECOND OBJECT B

# FIG. 4

EP 4 246 178 A2

DISTANCE MEASUREMENT UNIT — 42

IMAGE PROCESSING UNIT — 6

OBJECT DIRECTION DETECTION UNIT — 61

PIXEL DIVISION UNIT — 62

HIGH RESOLUTION DISTANCE IMAGE

FIG. 5

FIG. 6A

SECOND OBJECT B
PIXEL OF INTEREST
FIRST OBJECT A

FIG. 6B

SECOND OBJECT B
PIXEL OF INTEREST
FIRST OBJECT A

FIG. 7A

SECOND OBJECT B
PIXEL OF INTEREST
FIRST OBJECT A

FIG. 7B

SECOND OBJECT B
dpb dpa
FIRST OBJECT A

FIG. 8

EP 4 246 178 A2

SECOND OBJECT B          FIRST OBJECT A

px1     px2     px3     px4     px5

# FIG. 9

FIG.10

EP 4 246 178 A2

FIG.11

EP 4 246 178 A2